# EUROPEAN PATENT SPECIFICATION

(11) **EP 2 015 542 B1**
(45) Date of publication and mention of the grant of the patent: **16.01.2013**
(21) Application number: 08158835.2
(22) Date of filing: 24.06.2008
(51) Int. Cl.: H04L 29/08, H04L 29/06

(54) **Peer-to-peer streaming of media content**
Peer-to-Peer-Medieninhaltsströme
Diffusion de poste à poste d'un contenu média

(30) Priority: 13.07.2007 US 777534; 13.07.2007 SE 0701717
(43) Date of publication of application: 14.01.2009
(73) Proprietor: Spotify AB, 114 34 Stockholm (SE)
(72) Inventor: Ehn, Andreas, 115 57, Stockholm (SE); Hult, Magnus, 117 32, Stockholm (SE); Niemelä, Fredrik, 104 05, Stockholm (SE); Strigeus, Ludvig, 416 65, Göteborg (SE); Kreitz, Gunnar, 111 40, Stockholm (SE)
(74) Representative: Bratt, Jan Henrik

(56) References cited:
- US-A1- 2004 143 672
- US-A1- 2006 190 615
- XIN LIU ET AL: "A peer-to-peer framework for cost-effective on-demand media streaming" CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 1, 8 January 2006 (2006-01-08), pages 314-318, XP010893222 ISBN: 978-1-4244-0085-0
- MAGHAREI NAZANIN ET AL: "Understanding Mesh-based Peer-to-Peer Streaming" INTERNET CITATION, [Online] 23 November 2006 (2006-11-23), XP002444978 Retrieved from the Internet: URL:http://mirage.cs.uoregon.edu/pub/nossd av06.pdf> [retrieved on 2007-07-31]

## Description

### Technical field

The present invention pertains to a method and system adapted to peer-to-peer streaming of media content in a network for distribution of data.

### Background art

Today's solutions for media streaming being based on a client-server model are disadvantageous due to high bandwidth requirements on the server side. A reduction of these requirements would demand a peer-to-peer model for data distribution. However, the existing peer-to-peer systems are unsuitable for streaming for a number of reasons, for instance because data arrives unordered, and, in the typical case, it is not possible to start utilizing the received data packets until the final part of the streaming media has arrived. The media may here represent any kind of digital content, such as music, video, digital films or images.

Nodes (peers) in a peer-to-peer network may over time experience drastic changes in bandwidth availability, or even disappear completely. Moreover, the nodes may have asymmetric network connections, usually meaning that they have substantially higher downstream bandwidth than upstream bandwidth.

Hence, there is a need for an improved streaming-media distribution solution, which, on one hand, overcomes the above mentioned bandwidth requirements of the pure client-server model; and on the other hand, avoids the drawbacks of the existing peer-to-peer solutions.

In "A Peer-to-Peer Framework for Cost-Effective On-demand Media Streaming", Consumer Communications and Networking Conference, IEEE CCNC 2006, vol. 1, 8 January 2006, pages 314-318, Xin Liu et al. discloses a system for publishing video by splitting the video into segments and distributing the segments to different peers.

In "Understanding Mesh-based Peer-to-Peer Streaming", Magharei Nazanin et al. discloses the impact of overlay properties on the global pattern of content delivery and delivered quality to individual peers.

US 2004/0143672 discloses a system and method for distributing streaming content data from a server to multiple clients which enables the server to handle transient surges of requests by having the clients cooperate with the server and other clients to distribute content, thereby alleviating the load on the server. The server divides the streaming content into multiple sub-streams (e.g., by using multiple description coding), and constructs multiple distribution trees with itself at the root and each client as a node in each of the trees. Each sub-stream is transmitted down a corresponding one of the distribution trees. Clients that receive sub-streams from its parent nodes in the distribution trees in turn forward the sub-streams to their child nodes in the trees.

US 2006/0190615 discloses a peer-to-peer novel video streaming scheme in which each peer stores and streams videos to the requesting client peers. Each video is encoded into multiple descriptions and each description is placed on a different node. If a serving peer disconnects in the middle of a streaming session, the system searches for a replacement peer that stores the same video description and has sufficient uplink bandwidth. Employing multiple description coding in a peer-to-peer based network improves the robustness of the distributed streaming content in the event a serving peer is lost. Video quality can be maintained in the presence of server peers being lost. The video codec design and network policies have a significant effect on the streamed video quality. The system performance generally improves as the number of descriptions M for the video increases, which implies that a higher video quality can be obtained with the same network loading.

### Summary of the invention

The present invention relates to the provision of streaming media from a central server and/or peers in a peer-to-peer network without bandwidth guarantees.

The invention provides a method in accordance with claim 1, and a system in accordance with claim 4, for distribution of data in a network based on peer-to-peer streaming of media content.

According to the invention, the network has a central server for streaming media content to clients.

Further, every peer has software for retrieval of a media stream from the central server and from other peers. The software is adapted to transmit sub-streams of streaming media to other peers when requested.

According to the invention, a first set of a first number of sub-streams is generated from an original data stream, wherein any combination of a second number of sub-streams selected from the first set may be recombined to yield the original data stream. Each sub-stream in the first set is here encoded in such a manner that a given sub-block from a selected sub-stream can be combined with corresponding sub-blocks from the other selected sub-streams to yield the given block of the original data stream. Moreover, the second number is larger than or equal to two and smaller than or equal to the first number.

According to an embodiment, played media streams are recoded in such a manner that different peers, having sub-streams of the same media stream in their memory, have randomly chosen sub-streams of that media stream, thus increasing the number of available redundant sub-streams in the network.

Further embodiments of the system of the present invention are set forth through the set of attached dependent system claims.

According to one aspect of the present invention, there is provided a method for distribution of data in a network based on peer-to-peer streaming of media content, the network including a plurality of peers and a central server, the method being characterised by including: encoding, at the central server, an original stream of media content into a first number of sub-streams, wherein corresponding blocks of any combination of a given, second number of different sub-streams of the first number of sub-streams can be recombined to obtain the corresponding block of the original stream, the second number of sub-streams being smaller than the first number of sub-streams; retrieving, at each peer, a set of sub-streams of the first number of sub-streams from the central server and a number of the other peers, each sub-stream of the retrieved set of sub-streams being different in respect of each other and the number of sub-streams of the retrieved set of sub-streams corresponding to said second number; transmitting, by each peer, and on request, a sub-stream to another peer; replacing downloading of a sub-stream from one of the peers with downloading of another, different or identical, sub-stream from the central server, or from another of the peers, when it is determined that the amount of sub-stream data from said one of the peers is below a predefined amount of data in a reception buffer, wherein said another sub-stream is chosen such that each sub-stream of the retrieved set is different from the other sub-streams in the retrieved set; and replacing downloading of a sub-stream from the central server with downloading of another, different or identical, sub-stream from one of the peers, when a predefined condition is fulfilled.

According to another aspect of the present invention, there is provided a system for distribution of data in a network based on peer-to-peer streaming of media content, the system being characterised by including: a central server for distribution of streaming media content to a plurality of peers, the central server being configured to encode an original stream of media content into a first number of sub-streams, wherein corresponding blocks of any combination of a given, second number of different sub-streams of the first number of sub-streams can be recombined to obtain the corresponding block of the original stream, the second number of sub-streams being smaller than the first number of sub-streams; and a plurality of peers, each peer being configured to: retrieve a set of sub-streams of the first number of sub-streams from the central server and a number of the other peers, each sub-stream of the retrieved set of sub-streams being different in respect of each other and the number of sub-streams of the retrieved set of sub-streams corresponding to said second number; transmit, on request, a sub-stream to another of the peers; replace downloading of a sub-stream from one of the peers with downloading of another sub-stream from the central server, or from another of the peers, when it is determined that the amount of sub-stream data from said one of the peers is below a predefined amount of data in a reception buffer, wherein the peer is configured to choose said another sub-stream such that each sub-stream of the retrieved set is different from the other sub-streams in the retrieved set, and replace downloading of a sub-stream from the central server with downloading of another, different or identical, sub-stream from one of the peers, when a predefined condition is fulfilled.

### Brief description of the drawings

Henceforth reference is made the accompanied drawings and its related text, whereby the present invention is described through given examples and provided embodiments for a better understanding of the invention, wherein:
- Fig. 1: schematically illustrates a prior-art embodiment of distributing streaming media;
- Fig. 2: schematically illustrates how a conventional stream of streaming media in accordance with Fig. 1 is split length-wise in sub-streams according to the present invention;
- Fig. 3: schematically illustrates distribution sub-streams in accordance with Fig. 2 from a central server in accordance with the present invention;
- Fig. 4: schematically illustrates a central server connected to a peer-to-peer network;
- Fig. 5: schematically illustrates a buffer in client equipment receiving streaming media in accordance with the present invention;
- Fig. 6: schematically illustrates updating of the streaming media in accordance with Fig. 5 of the present invention;
- Fig. 7: schematically illustrates updating of the streaming media in accordance with Fig. 5 of the present invention;

### Detailed description of preferred embodiments

The present invention introduces streaming media by splitting an original data stream length-wise, i.e., given only the first fraction of the parts in a stream of data, it is possible to recreate the first fraction of the original data stream. To achieve this, the invention provides a central server system with guaranteed bandwidth, and further provides a handover process, which allows a client to switch from retrieving data from its peers to the central system when required. By splitting the data length-wise, individual peers from which a given client is streaming media need only serve data as fast as the original bit-rate divided by the number of concurrent streams.

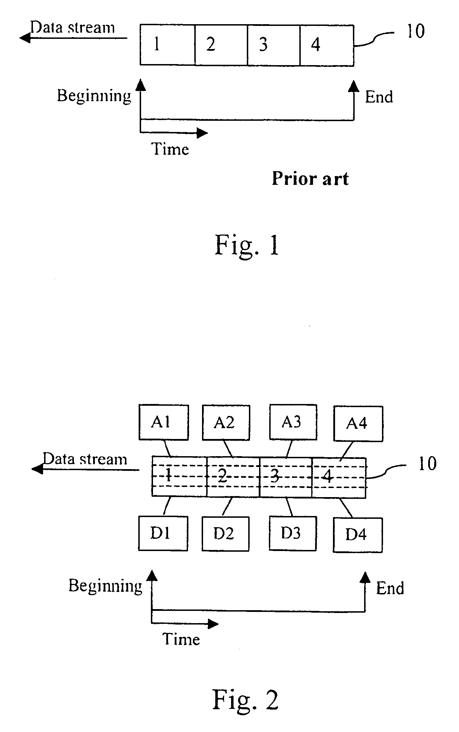

Fig. 1 schematically illustrates a prior-art embodiment of distributing streaming media 10. Throughout the present description streaming media is depicted as being divided into blocks denoted 1, 2, 3 etc. and length-wise split into sub-streams denoted A, B, C and D, each comprising the sub-blocks A1, A2, A3 etc., B1, B2, B3 etc., C1, C2, C3 etc. and D1, D2, D3 etc., in order to guide the reader through the teaching of the present invention. It is appreciated that the numbers of sub-streams and sub-blocks of data respectively are not limited to those given as examples herein.

Hence Fig. 1 depicts prior art streaming media blocks 10, labeled 1, 2, 3 and 4 respectively, being distributed from a server to a client. The blocks 10 are transmitted to a client downloading them in a flow from 1 to 4 until the stream ends. As mentioned above, existing peer-to-peer systems are unsuitable for streaming for a number of reasons, for instance data might arrive unordered, and in the typical case, it is not possible to start utilizing the received data packets until the final part of the streaming media has arrived.

Nodes (peers) in a peer-to-peer network may experience drastic changes in bandwidth availability or even disappear completely. Moreover, the nodes may have asymmetric network connections, which usually means that they have much higher downstream bandwidth than upstream ditto.

Hence, to solve existing problems, the present invention provides a method and a system consistent with what is depicted in Fig. 2 to Fig. 7.

Fig. 2 schematically illustrates how a conventional stream of media content 10 in accordance with Fig. 1 is regenerated from the four sub-streams A, B, C and D, consisting of sub-blocks A1-4, B1-4, C1-4 and D1-4 respectively in this example according to the present invention. The four sub-streams can be seen as constituting a length-wise split of the data stream, depicted as broken lines in Fig. 2.

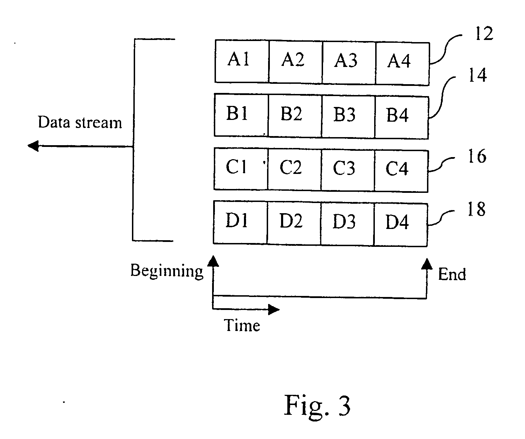

Fig. 3 schematically illustrates distribution of sub-streams A, B, C and D - labeled 12, 14, 16 and 18 respectively - made up of interleaved sub-blocks of data A1, A2, A3, A4; B1, B2, B3, B4; C1, C2, C3, C4; and D1, D2, D3, D4 respectively from a central server in accordance with the present invention. The blocks of data may be individually obtained by a client from the central server, or from its peers. In any case, from the original data stream 10, a number of different sub-streams are generated by the central server and any client having the data stream in its memory. Any set of a smaller or equal number - in the present example, four - of different sub-streams can be recombined to yield the original data stream 10.

Each sub-stream is encoded in such a manner that the corresponding blocks of any combination of a given number - in the present example, four - of different sub-streams can be recombined to obtain the corresponding block of the original data stream. This is accomplished by a suitable algorithm for this purpose such as a Solomon-Reed-type of algorithm, or any other similar algorithm known to a person skilled in the art. The algorithm is thus implemented in software and hardware residing in the peer equipment for downloading media from other peers or from a central server.

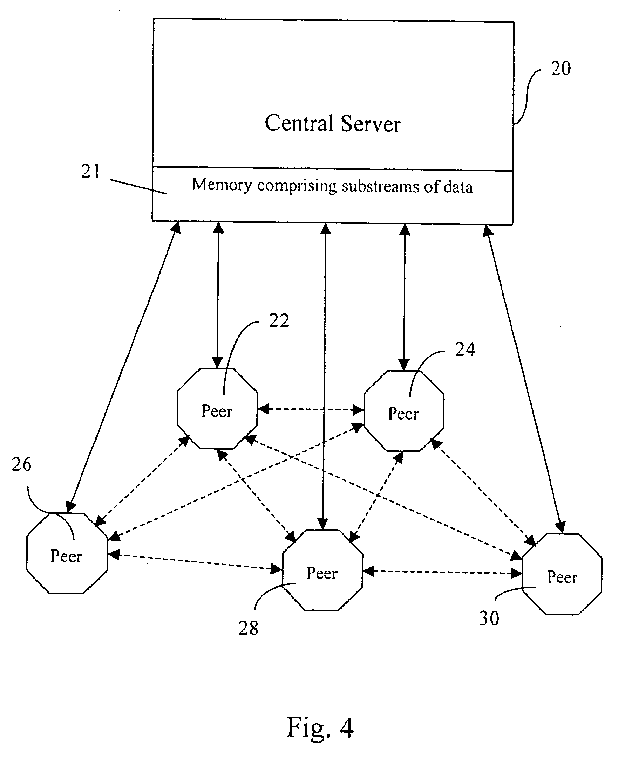

Fig. 4 schematically illustrates a central server 20 storing the sub-streams 12, 14, 16, 18 in a memory area 21 for retrieval by peers 22, 24, 26, 28, 30 connected to the peer-to-peer network. Solid double arrows indicate communication between single peers with the central server 20 and vice versa, whereas broken-line double arrows designate communication between peers in the network. Every single peer 22, 24, 26, 28, 30 is provided the software mentioned to communicate with peers and the central server 20. The software also comprises a handover function that enables a peer to switch between receiving data streams from the central server and its peers.

Moreover, Fig. 4 schematically depicts the system of the present invention operated by the method described in here.

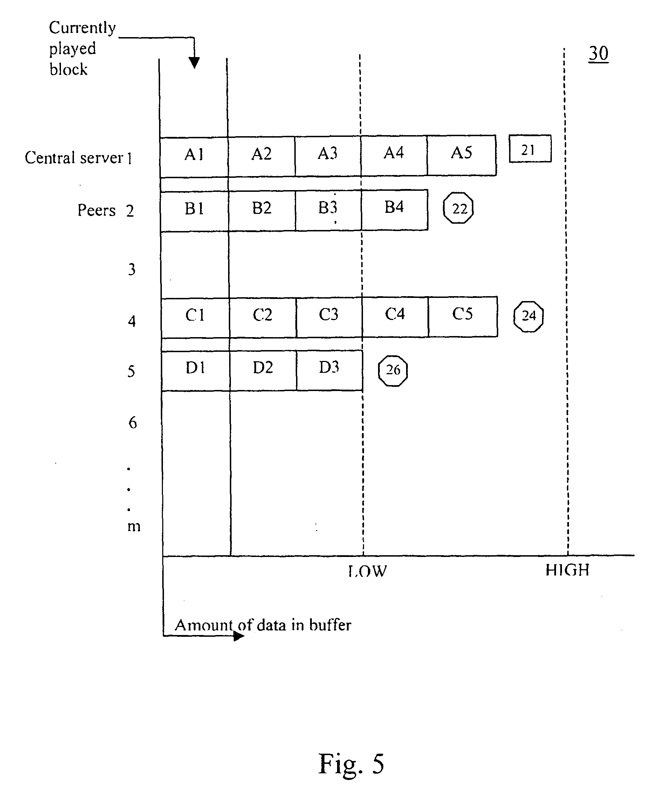

Fig. 5 schematically illustrates a buffer in client 30 equipment or in any peer equipment receiving streaming media in accordance with the present invention.

The number of possible sub-streams is higher than the number of sub-streams required to reconstruct the original data stream, and peers randomly choose among the possible sub-streams, which to generate. This increases the probability of different peers 22, 24, 26 having different sub-streams of the original streams wanted by the client 30, meaning that they can be utilized in conjunction by a client 30 retrieving a stream.

The stream of media played at a client 30 is depicted at the arrow pointing from a currently played block at the block played. It is possible to play a block i of the media if and only if all of the sub-blocks Ai, Bi, Ci and Di from the sub-streams A, B, C, and D are available in the buffer memory. The blocks must be played in order, beginning with 1 and then 2, 3 etc. If there are any sub-blocks missing for the block i, these blocks must be obtained before the block i can be played. In Fig. 5 it is currently possible to play blocks 1-3, since sub-blocks 1-3 of all sub-streams have been downloaded. To play block 4, however, sub-block D4 must be obtained. As for now in Fig. 5 it is seen that there is still enough data available for playback.

Every single sub-block can be concatenated in the correct order by the algorithm as described above, if they are stored/available in the buffer memory.

In Fig.5 and according to the present invention there are defined two time constants: LOW and HIGH (see Fig.5) depicted as vertical broken lines, related to the amount of buffered material that is yet un-played by the client 30.

When the media streaming is about to start, the client starts streaming a number - in the present example, four - of sub-streams, from the peer-to-peer network and, if necessary in order to ensure low latency at startup, in conjunction with the central server 20. This is depicted in Fig. 5, as one sub-stream A is fetched from the central server 20 memory 21, marked by a rectangle containing the number 21 in Fig. 5. Meanwhile peers 22, 24, 26 with the appropriate sub-streams B, C, D, marked in an octagon with the peer's reference numeral from where the stream was fetched, are located via the software residing in participating peer equipment for downloading streaming media according to the present invention in the peer-to-peer network.

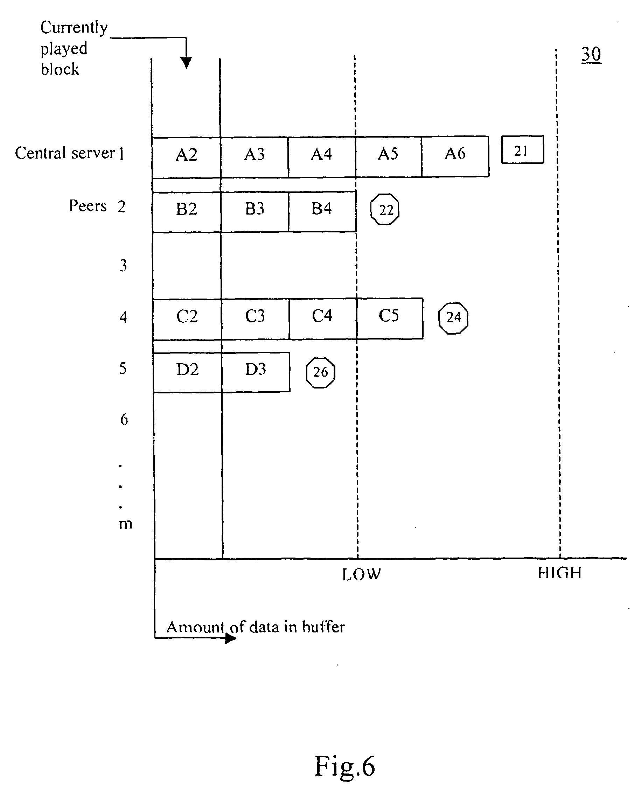

Fig. 6 schematically illustrates updating of the streaming media in accordance with Fig. 5 of the present invention where it can be seen that the amount of sub-stream data being downloaded from peer 26 in the client buffer has fallen below the LOW constant. Hence, the situation requires faster communication in order to fetch sub-block number 4, which is now accomplished by, instead of fetching D4 from peer 26, fetching sub-block 4 of another sub-stream from the central server memory 21 through a handover to the same.

Whenever a sub-stream downloaded from the peer-to-peer network, for example sub-stream D, as depicted in Fig. 6, has less than LOW constant data buffered, downloading of that sub-stream is halted and replaced by downloading of another sub-stream from the central server 20 memory 21.

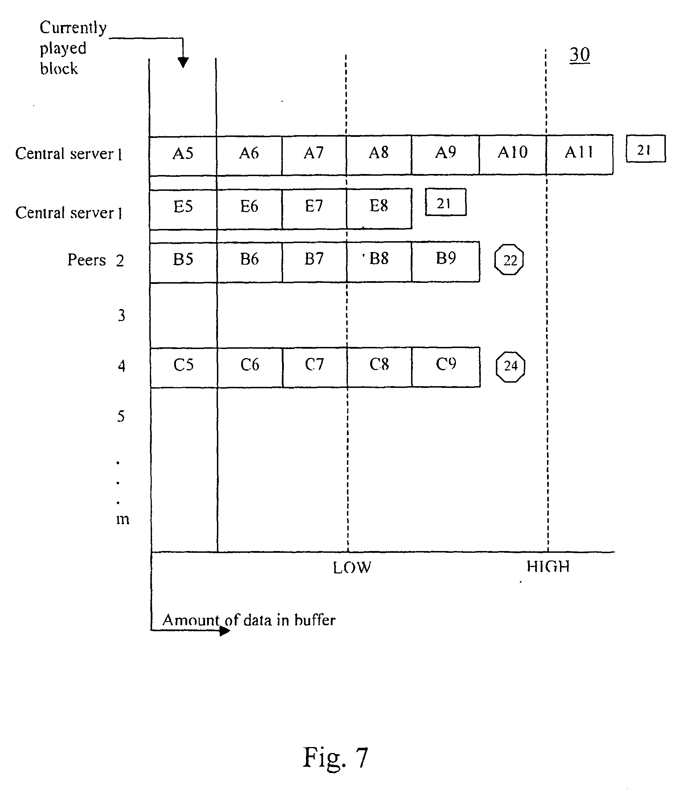

The sub-blocks A2, B2, C2, D2 of block 2 being played by the client equipment are now stored in a memory/cache by the client 30 software, as are all the sub-blocks of block 3. Sub-block D4 of block 4, however, has not yet been fetched from peer 26, causing sub-stream D to fall below the LOW constant. As such is the case, the peer software hands over/switches the fetching of streaming media to the central server 20 memory 21 in order to restore the buffer level of the fourth sub-stream. This replacement sub-stream is depicted in Fig. 7 as sub-stream D.

Fig. 7 schematically illustrates updating of the streaming media in accordance with Fig. 5 of the present invention where it can be seen that the amount of sub-stream data of sub-stream A being downloaded from the central server 20 memory 21 in the client buffer has risen above the HIGH constant. Hence, the situation is here the opposite of the situation illustrated in Fig. 6, and download of sub-stream A can seize, being replaced by download of another sub-stream from a peer through a handover to the same.

Whenever a sub-stream downloaded from the central server 20 has more than HIGH data buffered, downloading of that sub-stream is halted and replaced by downloading of another sub-stream from the peer-to-peer network, which is the case illustrated in Fig. 7. This figure shows that buffer memory stored sub-blocks A5-A11 of sub-stream A exceed the high buffer level. As such is the case, the peer software hands over/switches the fetching of streaming media to a suitable peer in order to preserve central server bandwidth.

The method and system of the present invention ensure to a greater degree than existing peer-to-peer solutions data distribution characteristics suitable for streaming media, and allow for lower server bandwidth consumption than existing client-server based streaming solutions.

A possible optimization is to make sure that there is never more than one connection to the central server 20. This is accomplished by blockwise interleaving the streams, see Fig. 3, that are concurrently being downloaded from the central server and treating the LOW constant as if it were set to the position of the central server 20 download whenever there is such a download. If there are no peers having sub-streams to provide the client 30, all sub-streams are of course fetched from the central server 20 memory 21.

The collective content of the peer-to-peer network is the content of data caches of the peers. White retrieving sub-streams, the original data is recreated in real-time for playback. Having played back a block, the client recodes the block as the sub-blocks of a number of new randomly chosen sub-streams, which are stored in the client's data cache. This means that the distribution of sub-streams in the peer-to-peer network is kept optimal. As an example blocks can be arbitrarily recoded for instance, block 1 to A1, D1, F1 and T1.

The attached set of claims provides further embodiments to a person skilled in the art, as such the present invention is not limited to the described embodiments and given examples.

## Claims

1. A method for distribution of data in a network based on peer-to-peer streaming of media content, the network including a plurality of peers (22, 24, 26, 28, 30) and a central server (20), the method being **characterised by** including:
encoding, at the central server, an original stream (10) of media content into a first number of sub-streams (A, B, C, D), wherein corresponding blocks of any combination of a given, second number of different sub-streams of the first number of sub-streams can be recombined to obtain the corresponding block of the original stream, the second number of sub-streams being smaller than the first number of sub-streams;
retrieving, at each peer, a set of sub-streams of the first number of sub-streams from the central server and a number of the other peers, each sub-stream of the retrieved set of sub-streams being different in respect of each other and the number of sub-streams of the retrieved set of sub-streams corresponding to said second number;
transmitting, by each peer, and on request, a sub-stream to another peer;
replacing downloading of a sub-stream from one of the peers with downloading of another, different or identical, sub-stream from the central server, or from another of the peers, when it is determined that the amount of sub-stream data from said one of the peers is below a predefined amount of data in a reception buffer, wherein said another sub-stream is chosen such that each sub-stream of the retrieved set is different from the other sub-streams in the retrieved set; and
replacing downloading of a sub-stream from the central server with downloading of another, different or identical, sub-stream from one of the peers, when a predefined condition is fulfilled.

2. The method of claim 1, wherein the predefined condition is fulfilled when it is determined that the sub-stream from the central server is above a predefined amount of data in the reception buffer.

3. The method of claim 1, wherein the set of sub-streams retrieved by each peer form the encoded stream of media content, the method including
recoding the stream of media content in such a manner that different peers, storing sub-streams of the same media stream, have randomly chosen sub-streams of that media stream.

4. A system for distribution of data in a network based on peer-to-peer streaming of media content, the system being **characterised by** including:
a central server (20) for distribution of streaming media content to a plurality of peers (22, 24, 26, 28, 30), the central server being configured to encode an original stream (10) of media content into a first number of sub-streams (A, B, C, D), wherein corresponding blocks of any combination of a given, second number of different sub-streams of the first number of sub-streams can be recombined to obtain the corresponding block of the original stream, the second number of sub-streams being smaller than the first number of sub-streams; and
a plurality of peers, each peer being configured to:
retrieve a set of sub-streams of the first number of sub-streams from the central server and a number of the other peers, each sub-stream of the retrieved set of sub-streams being different in respect of each other and the number of sub-streams of the retrieved set of sub-streams corresponding to said second number;
transmit, on request, a sub-stream to another of the peers;
replace downloading of a sub-stream from one of the peers with downloading of another sub-stream from the central server, or from another of the peers, when it is determined that the amount of sub-stream data from said one of the peers is below a predefined amount of data in a reception buffer, wherein the peer is configured to choose said another sub-stream such that each sub-stream of the retrieved set is different from the other sub-streams in the retrieved set, and
replace downloading of a sub-stream from the central server with downloading of another, different or identical, sub-stream from one of the peers, when a predefined condition is fulfilled.

5. The system of claim 4, wherein the predefined condition is fulfilled when it is determined that the sub-stream from the central server is above a predefined amount of data in the reception buffer.

6. The system of claim 4, wherein the set of sub-streams retrieved by each peer form the encoded stream of media content, each peer being further configured to
recode the stream of media content in such a manner that different peers, storing sub-streams of the same media stream, have randomly chosen sub-streams of that media stream.

## Patentansprüche

1. Verfahren zur Verteilung von Daten in einem Netzwerk basierend auf Peer-to-Peer-Streaming von Medieninhalten, wobei das Netzwerk eine Mehrzahl von Peers (22, 24, 26, 28, 30) und einen zentralen Server (20) aufweist, wobei das Verfahren **dadurch gekennzeichnet ist, dass** es die nachfolgenden Schritte aufweist:
Codieren, in dem zentralen Server, eines Originalstroms (10) von Medieninhalten in eine erste Anzahl von Sub-Strömen (A, B, C, D), wobei entsprechende Blöcke einer beliebigen Kombination einer gegebenen zweiten Anzahl von anderen Sub-Strömen der ersten Anzahl von Sub-Strömen rekombiniert werden können, um den entsprechenden Block des Originalstroms zu erhalten, wobei die zweite Anzahl von Sub-Strömen geringer ist als die erste Anzahl von Sub-Strömen;
Abrufen, an jedem Peer, eines Satzes von Sub-Strömen der ersten Anzahl von Sub-Strömen von dem zentralen Server und einer Anzahl von anderen Peers, wobei jeder Sub-Strom des abgerufenen Satzes von den anderen verschieden ist und hinsichtlich der Anzahl der Sub-Ströme des abgerufenen Satzes von Sub-Strömen verschieden ist, welche der zweiten Anzahl entsprechen;
Übertragen, von jedem Peer und auf Anfrage, eines Sub-Stroms zu einem anderen der Peers;
Ersetzen des Herunterladens eines Sub-Stroms von einem der Peers durch das Herunterladen von einem anderen, unterschiedlichen oder gleichen, Sub-Strom von dem zentralen Server, wenn festgestellt wird, dass die Menge der Sub-Strom-Daten von dem einen der Peers unter eine vorbestimmte Menge von Daten in einem Empfangspuffer liegt, wobei der andere Sub-Strom so ausgewählt wird, dass jeder Sub-Strom des abgerufenen Satzes von den anderen Sub-Strömen in dem abgerufenen Satz verschieden ist; und
Ersetzen des Herunterladens eines Sub-Stroms von dem zentralen Server durch das Herunterladen von einem anderen, unterschiedlichen oder gleichen, Sub-Strom von einem der Peers, wenn eine vorgegebene Bedingung erfüllt ist.

2. Verfahren gemäß Anspruch 1, wobei die vorgegebene Bedingung erfüllt ist, wenn festgestellt wird, dass der Sub-Strom von dem zentralen Server oberhalb einer vorgegebenen Menge von Daten in dem Empfangspuffer ist.

3. Verfahren gemäß Anspruch 1, wobei der Satz von Sub-Strömen, welcher von jedem Peer abgerufen wird, den codierten Strom von Medieninhalten bildet, wobei das Verfahren aufweist:
Aufzeichnen des Stroms von Medieninhalten auf eine solche Weise, dass unterschiedliche Peers, welche Sub-Ströme desselben Medienstroms speichern, zufällig ausgewählte Sub-Ströme dieses Medienstroms aufweisen.

4. System zur Verteilung von Daten in einem Netzwerk basierend auf Peer-to-Peer-Streaming von Medieninhalten, wobei das System **dadurch gekennzeichnet ist, dass** es die nachfolgenden Komponenten aufweist:
einen zentralen Server (20) zur Verteilung von Medieninhalten an eine Mehrzahl von Peers (22, 24, 26, 28, 30), wobei der zentrale Server konfiguriert ist zum Codieren eines Originalstroms (10) von Medieninhalten in eine erste Anzahl von Sub-Strömen (A, B, C, D), wobei entsprechende Blöcke einer beliebigen Kombination einer gegebenen zweiten Anzahl von anderen Sub-Strömen der ersten Anzahl von Sub-Strömen rekombiniert werden können, um den entsprechenden Block des Originalstroms zu erhalten, wobei die zweite Anzahl von Sub-Strömen geringer ist als die erste Anzahl von Sub-Strömen; und
eine Mehrzahl von Peers, wobei jeder Peer konfiguriert ist zum:
Abrufen eines Satzes von Sub-Strömen der ersten Anzahl von Sub-Strömen von dem zentralen Server und einer Anzahl von anderen Peers, wobei jeder Sub-Strom des abgerufenen Satzes von den anderen verschieden ist und hinsichtlich der Anzahl der Sub-Ströme des abgerufenen Satzes von Sub-Strömen verschieden ist, welche der zweiten Anzahl entsprechen;
Übertragen, auf Anfrage, eines Sub-Stroms zu einem anderen der Peers;
Ersetzen des Herunterladens eines Sub-Stroms von einem der Peers durch das Herunterladen von einem anderen Sub-Strom von dem zentralen Server oder von einem anderen der Peers, wenn festgestellt wird, dass die Menge der Sub-Strom-Daten von dem einen der Peers unter eine vorbestimmte Menge von Daten in einem Empfangspuffer liegt, wobei der Peer konfiguriert ist, einen Sub-Strom so auszuwählen, dass jeder Sub-Strom des abgerufenen Satzes von den anderen Sub-Strömen in dem abgerufenen Satz verschieden ist; und
Ersetzen des Herunterladens eines Sub-Stroms von dem zentralen Server durch das Herunterladen von einem anderen, unterschiedlichen oder gleichen, Sub-Strom von einem der Peers, wenn eine vorgegebene Bedingung erfüllt ist.

5. System gemäß Anspruch 4, wobei die vorgegebene Bedingung erfüllt ist, wenn festgestellt wird, dass der Sub-Strom von dem zentralen Server oberhalb einer vorgegebenen Menge von Daten in dem Empfangspuffer ist.

6. System gemäß Anspruch 4, wobei der Satz von Sub-Strömen, welcher von jedem Peer abgerufen wird, den codierten Strom von Medieninhalten bildet, wobei jeder Peer weiterhin konfiguriert ist zum:
Aufzeichnen des Stroms von Medieninhalten auf eine solche Weise, dass unterschiedliche Peers, welche Sub-Ströme desselben Medienstroms speichern, zufällig ausgewählte Sub-Ströme dieses Medienstroms aufweisen.

## Revendications

1. Un procédé de distribution de données dans un réseau basé sur une diffusion en flux de poste à poste de contenu de media, le réseau incluant une pluralité de postes (22, 24, 26, 28, 30) et un serveur central (20), le procédé étant **caractérisé en ce qu'**il inclut :
le codage, par le serveur central, d'un flux d'origine (10) de contenu de media en un premier nombre de sous-flux (A, B, C, D), des blocs correspondants de toute combinaison d'un second nombre donné de différents sous-flux pouvant être recombinés pour obtenir le bloc correspondant du flux d'origine, le second nombre de sous-flux étant inférieur au premier nombre de sous-flux ;
la récupération, par chaque poste, d'un ensemble de sous-flux du premier nombre de sous-flux en provenance du serveur central et d'un certain nombre des autres postes, chaque sous-flux de l'ensemble récupéré de sous-flux étant différent des autres et le nombre de sous-flux de l'ensemble récupéré de sous-flux correspondant audit second nombre ;
l'émission, par chaque poste, et sur requête, d'un sous-flux vers un autre poste ;
le remplacement du téléchargement d'un sous-flux en provenance de l'un des postes par le téléchargement d'un autre sous-flux, différent ou identique, en provenance du serveur central, ou d'un autre des postes, lorsque l'on détermine que la quantité de données de sous-flux provenant dudit un des postes est inférieure à une quantité prédéfinie de données dans un tampon de réception, ledit autre sous-flux étant choisi de telle manière que chaque sous-flux de l'ensemble récupéré soit différent des autres sous-flux de l'ensemble récupéré ; et
le remplacement du téléchargement d'un sous-flux provenant du serveur central par le téléchargement d'un autre sous-flux, différent ou identique, en provenance de l'un des postes, lorsqu'une condition prédéfinie est remplie.

2. Le procédé de la revendication 1, dans lequel la condition prédéfinie est remplie lorsque l'on détermine que le sous-flux en provenance du serveur central est au-dessus d'une quantité prédéfinie de données dans le tampon de réception.

3. Le procédé de la revendication 1, dans lequel l'ensemble de sous-flux récupéré par chaque poste forme le flux codé de contenu de media, le procédé comprenant :
le recodage du flux de contenu de media d'une manière telle que des postes différents, mémorisant des sous-flux du même flux de media, aient des sous-flux de ce flux de media choisis de façon aléatoire.

4. Un système de distribution de données dans un réseau basé sur une diffusion en flux de poste à poste de contenu de media, le système étant **caractérisé en ce qu'**il comprend :
un serveur central (20) pour la distribution d'un contenu de media de diffusion en flux vers une pluralité de postes (22, 24, 26, 28, 30), le serveur central étant configuré pour coder un flux d'origine (10) de contenu de media en un premier nombre de sous-flux (A, B, C, D), des blocs correspondants de toute combinaison d'un second nombre donné de sous-flux différents du premier nombre de sous-flux pouvant être recombinés pour obtenir le bloc correspondant du flux d'origine, le second nombre de sous-flux étant inférieur au premier nombre de sous-flux ; et
une pluralité de postes, chaque poste étant configuré pour permettre :
la récupération d'un ensemble de sous-flux du premier nombre de sous-flux en provenance du serveur central et
d'un certain nombre des autres postes, chaque sous-flux de l'ensemble récupéré de sous-flux étant différent des autres et le nombre de sous-flux de l'ensemble récupéré de sous-flux correspondant audit second nombre ;
l'émission, sur requête, d'un sous-flux vers un autre des postes ;
le remplacement du téléchargement d'un sous-flux en provenance de l'un des postes par le téléchargement d'un autre sous-flux en provenance du serveur central, ou d'un autre des postes, lorsque l'on détermine que la quantité de données de sous-flux provenant dudit un des postes est inférieure à une quantité prédéfinie de données dans un tampon de réception,
dans lequel le poste est configuré pour choisir ledit autre sous-flux de telle manière que chaque sous-flux de l'ensemble récupéré soit différent des autres sous-flux de l'ensemble récupéré ; et
le remplacement du téléchargement d'un sous-flux provenant du serveur central par le téléchargement d'un autre sous-flux, différent ou identique, en provenance de l'un des postes, lorsqu'une condition prédéfinie est remplie.

5. Le système de la revendication 4, dans lequel la condition prédéfinie est remplie lorsque l'on détermine que le sous-flux en provenance du serveur central est au-dessus d'une quantité prédéfinie de données dans le tampon de réception.

6. Le système de la revendication 4, dans lequel l'ensemble de sous-flux récupéré par chaque poste forme le flux codé de contenu de media, chaque poste étant en outre configuré pour :
recoder le flux de contenu de media d'une manière telle que des postes différents, mémorisant des sous-flux du même flux de media, aient des sous-flux de ce flux de media choisis de façon aléatoire.
